# EUROPÄISCHE PATENTSCHRIFT

(11) **EP 4 103 923 B1**
(45) Veröffentlichungstag und Bekanntmachung des Hinweises auf die Patenterteilung: **02.12.2026**
(21) Anmeldenummer: 21706204.1
(22) Anmeldetag: 12.02.2021
(51) Int. Cl.: G01K 1/18, G01K 1/14, G01K 7/22

(54) **VORRICHTUNG ZUR ERFASSUNG DER TEMPERATUR EINES OBJEKTS**
DEVICE FOR DETERMINING THE TEMPERATURE OF AN OBJECT
DISPOSITIF DE DÉTERMINATION DE LA TEMPÉRATURE D'UN OBJET

(30) Priorität: 14.02.2020 DE 102020103915
(43) Veröffentlichungstag der Anmeldung: 21.12.2022
(73) Patentinhaber: Schlaeger Kunststofftechnik Gmbh, 95448 Bayreuth (DE)
(72) Erfinder: FUCHS, Anton, 90607 Rückersdorf (DE)
(74) Vertreter: Hafner & Kohl PartmbB
(86) Internationale Anmeldenummer: PCT/EP2021/053567
(87) Internationale Veröffentlichungsnummer: WO 2021/160870

(56) Entgegenhaltungen:
- DE-A1- 102016 119 430
- DE-A1- 102016 119 430
- DE-T5- 112016 004 047
- US-A1- 2018 209 829
- US-A1- 2019 162 603

## Beschreibung

Die Erfindung betrifft eine Vorrichtung zur Erfassung der Temperatur eines Objekts, wobei die Vorrichtung einen Grundkörper mit einem durch Wandungen begrenzten Innenraum zur Aufnahme des Objekts umfasst, wobei innerhalb wenigstens einer Wandung wenigstens ein zur Erfassung der Temperatur eingerichtetes Erfassungselement angeordnet oder ausgebildet ist, sowie ein Verfahren zur Herstellung einer solchen Vorrichtung.

Entsprechende bisweilen auch als Sensoranordnungen bezeichnete Vorrichtungen sind aus dem Stand der Technik in unterschiedlichen Ausführungsformen dem Grunde nach bekannt. Entsprechende Vorrichtungen umfassen einen durch Wandungen definierten Grundkörper. Die Wandungen des Grundkörpers begrenzen einen Innenraum, welcher zur Aufnahme eines Objekts, dessen Temperatur zu erfassen ist, eingerichtet ist. Innerhalb wenigstens einer Wandung ist dabei ein, typischerweise als Temperatursensor ausgebildetes oder einen solchen umfassendes, Erfassungselement angeordnet oder ausgebildet.

Der Umstand, dass zwischen dem jeweiligen Objekt und dem Erfassungselement konstruktionsbedingt typischerweise kein direkter Kontakt und somit eine schlechte Wärmeübertragung besteht, kann die exakte Erfassung der Temperatur des Objekts beeinträchtigen.

Vor diesem Hintergrund besteht ein Bedarf nach einer, insbesondere im Hinblick auf die thermische Verbindung zwischen einem entsprechenden Objekt und einem entsprechenden Erfassungselement, verbesserten Vorrichtung zur Erfassung der Temperatur eines Objekts.

Zum Stand der Technik wird auf die Dokumente DE 10 2016 119 430 A1, US 2018/209829 A1 und US 2019/162603 A1 und DE 11 2016 004 047 B4 verwiesen.

Der Erfindung liegt die Aufgabe zugrunde, eine, insbesondere im Hinblick auf die thermische Verbindung zwischen einem entsprechenden Objekt und einem entsprechenden Erfassungselement, verbesserte Vorrichtung zur Erfassung der Temperatur eines Objekts anzugeben.

Die Aufgabe wird durch eine Vorrichtung gemäß Anspruch 1 gelöst. Die hierzu abhängigen Ansprüche betreffen mögliche Ausführungsformen der Vorrichtung.

Ein erster Aspekt der Erfindung betrifft eine Vorrichtung zur Erfassung der Temperatur eines Gegenstands. Die Vorrichtung ist sonach zur Erfassung der Temperatur eines Objekts eingerichtet. Die Vorrichtung kann auch als Sensoranordnung, d. h. insbesondere als Temperatursensoranordnung, bezeichnet bzw. erachtet werden.

Das Objekt, dessen Temperatur vermittels der Vorrichtung zu erfassen ist, kann aus einem thermisch leitfähigen Material, wie z. B. einem Metall, bzw. einer thermisch leitfähigen Materialstruktur, wie z. B. einer Metallstruktur, gebildet sein oder ein(e) solche(s) umfassen. Das Objekt kann eine stabartige bzw. -förmige geometrisch-konstruktive Gestalt aufweisen. Bei dem Objekt kann es sich sonach z. B. um einen Stab aus Metall handeln.

Das Objekt ist typischerweise mit einer Wärmequelle thermisch koppelbar oder gekoppelt, über welche das Objekt temperierbar oder temperiert ist. Die Temperatur des Objekts bestimmt sich sonach wesentlich durch die über die mit dem Objekt thermisch koppelbare oder gekoppelte Wärmequelle in das Objekt einbringbare Wärmemenge. Die Wärmequelle kann je nach Anwendung der Vorrichtung variieren. Für das Beispiel einer Anwendung der Vorrichtung in einem Fahrzeug, d. h. insbesondere in einem Kraftfahrzeug, wie z. B. einem Personenkraftwagen, kann die Wärmequelle eine (kraft)fahrzeugseitige Wärmequelle sein.

Das Objekt kann alternativ oder ergänzend mit einer Strom- und/oder Spannungsquelle koppelbar oder gekoppelt sein. Insbesondere kann das Objekt mit einer Hochspannungsquelle koppelbar oder gekoppelt sein; mithin kann an dem Objekt eine Hochspannung, d. h. insbesondere eine Spannung oberhalb 1 kV, anliegen. Für das Beispiel einer Anwendung der Vorrichtung in einem Fahrzeug, d. h. insbesondere in einem Kraftfahrzeug, wie z. B. einem Personenkraftwagen, kann die Strom- und/oder Spannungsquelle eine (kraft)fahrzeugseitige Strom- und/oder Spannungsquelle sein.

Die Wärmequelle kann identisch mit der Strom- und/oder Spannungsquelle sein und umgekehrt.

Die Vorrichtung umfasst einen Grundkörper. Der Grundkörper kann auch als Gehäuseteil der Vorrichtung bezeichnet bzw. erachtet werden. Der Grundkörper weist ein oder mehrere Wandungen auf bzw. ist durch eine oder mehrere Wandungen definiert. Die eine oder mehreren Wandungen begrenzen wenigstens einen Innenraum zur Aufnahme eines Objekts, dessen Temperatur vermittels der Vorrichtung zu erfassen ist. Der Grundkörper kann sonach eine hohlzylinderartige bzw. -förmige geometrische Grundform aufweisen. Die geometrisch-konstruktiven Eigenschaften, d. h. insbesondere Abmessungen, Form, etc., des Innenraums sind typischerweise an die geometrisch-konstruktiven Eigenschaften, d. h. insbesondere Abmessungen, Form, etc., des in diesem aufzunehmenden bzw. aufgenommenen Objekts angepasst, sodass ein Objekt möglichst passgenau in dem Innenraum aufnehmbar ist. Wie sich im Weiteren ergibt, kann ein entsprechendes Objekt, insbesondere aufgrund hoher Fertigungstoleranzen, mit einem gewissen Spiel in dem Innenraum aufnehmbar oder aufgenommen sein.

Bei dem Grundkörper der Vorrichtung handelt es sich typischerweise um ein Spritzgussteil. Der Grundkörper ist sonach typischerweise aus einem spritzgießbaren oder spritzgegossenen Kunststoffmaterial gebildet. Insbesondere kommen spritzgießbare Kunststoffmaterialen mit einer hohen elektrischen und/oder thermischen Stabilität, d. h. insbesondere Hochleistungskunststoffmaterialien, in Betracht. Lediglich beispielhaft wird auf Polyamidimid (PAI), Polyetheretherketon (PEEK), Polyphenylensulfid (PPS), Polyphenylsulfon (PPSU), Polyimid (PI), Polyphthalamid (PPA) verwiesen. Selbstverständlich sind Mischungen chemisch unterschiedlicher Kunststoffmaterialien denkbar.

Sofern es sich bei der Vorrichtung um eine besonders klein bauende Bauteilgruppe, wie z. B. eine Präzisionsbauteilgruppe, handelt, kann es sich bei dem Grundkörper um ein Mikrospritzgussteil handeln.

Wenigstens eine Wandung des Grundkörpers kann den Innenraum in zwei Innenraumbereiche unterteilen. Eine entsprechende Wandung kann insbesondere stegartig bzw. -förmig ausgebildet sein und sich von einer anderen Wandung, wie z. B. einer einen Boden des Grundkörpers bildenden Wandung, in den Innenraum erstrecken; der Innenraum kann sonach durch eine entsprechende sich von einer anderen Wandung, wie z. B. einer einen Boden des Grundkörpers bildenden Wandung, stegartig bzw. -förmig in den Innenraum erstreckenden Wandung in wenigstens zwei Innenraumbereiche unterteilt sein. In diesem Fall kann wenigstens ein Innenraumbereich zur Aufnahme eines entsprechenden Objekts eingerichtet sein; die vorstehenden Ausführungen im Zusammenhang mit der Aufnahme eines Objekts in dem Innenraum gelten sonach analog für einen entsprechenden Innenraumbereich.

Eine entsprechend stegartig bzw. -förmig ausgebildete Wandung kann im Bereich ihres freien Endes zumindest einseitig eine rampenartige bzw. -förmige Gestaltung aufweisen. Derart kann z. B. ein einfaches Einführen eines in den Innenraum aufzunehmenden Objekts in den Innenraum realisiert werden.

Innerhalb wenigstens einer Wandung des Grundkörpers ist wenigstens ein zur Erfassung einer Temperatur eingerichtetes Erfassungselement angeordnet oder ausgebildet. Wenigstens eine Wandung ist sonach mit wenigstens einem zur Erfassung einer Temperatur eingerichteten Erfassungselement versehen. Das Erfassungselement ist typischerweise unverlierbar innerhalb der jeweiligen Wandung angeordnet oder ausgebildet. Das Erfassungselement ist sonach, insbesondere vollständig, von dem die Wandung bildenden Material umgeben bzw. umschlossen. Dies kann z. B. dadurch realisiert sein, dass das Erfassungselement mit einem die Wandung bildenden Material umspritzt oder in einem hierfür innerhalb der Wandung vorgesehenen Aufnahmeraum angeordnet oder ausgebildet ist. Das Erfassungselement kann insbesondere innerhalb einer entsprechenden, den Innenraum in zwei Innenraumbereiche unterteilenden Wandung angeordnet oder ausgebildet sein.

Das Erfassungselement kann als Temperatursensor ausgebildet sein oder einen solchen umfassen. Ein entsprechender Temperatursensor kann z. B. als Thermistor ausgebildet sein oder einen solchen umfassen. Ein entsprechender Thermistor kann z. B. als NTC-Element (Heißleiter) ausgebildet sein oder einen solchen umfassen.

Die Vorrichtung umfasst wenigstens ein mit einem in dem Innenraum aufnehmbaren oder aufgenommenen Objekt in thermischen Kontakt bringbares oder gebrachtes thermisch leitfähiges Kontaktelement. Das Kontaktelement ist an oder in der Wandung, innerhalb welcher das Erfassungselement angeordnet oder ausgebildet ist, angeordnet oder ausgebildet. Das Kontaktelement ist sonach, insbesondere in thermischer Hinsicht, zwischen ein in dem Innenraum aufnehmbares oder aufgenommenes Objekt und das innerhalb der Wandung angeordnete oder ausgebildete Kontaktelement geschaltet angeordnet oder ausgebildet. Das Kontaktelement ermöglicht damit eine verbesserte Wärmeübertragung zwischen einem in dem Innenraum aufnehmbaren oder aufgenommenen Objekt und dem innerhalb der Wandung angeordneten oder ausgebildeten Erfassungselement. Das Kontaktelement kann sonach eine thermische Brücke zwischen einem in dem Innenraum aufnehmbaren oder aufgenommenen Objekt und dem innerhalb der Wandung angeordneten oder ausgebildeten Erfassungselement bilden, sodass, wenngleich zwischen dem Objekt und dem innerhalb der Wandung angeordneten oder ausgebildeten Erfassungselement typischerweise kein direkter Kontakt besteht, die Wärmeübertragung zwischen dem Objekt und dem innerhalb der Wandung angeordneten oder ausgebildeten Erfassungselement (erheblich) verbessert ist.

Das Kontaktelement kann aus einem thermisch leitfähigen Metall, wie z. B. Kupfer, gebildet sein oder ein solches umfassen. Alternativ oder ergänzend kann das Kontaktelement aus einer thermisch leitfähigen Metallstruktur, wie z. B. einer Kupferstruktur, gebildet sein oder eine solche umfassen. Prinzipiell sind auch Ausführungen des Kontaktelements aus anderen thermisch leitfähigen Materialien bzw. Materialstrukturen denkbar; beispielsweise ist auf mit thermisch leitfähigen Partikeln, wie z. B. Graphitpartikeln, gefüllte Kunststoffmaterialien zu verweisen.

Insgesamt liegt eine verbesserte Vorrichtung zur Erfassung der Temperatur eines Objekts vor. Das Kontaktelement ist typischerweise benachbart zu dem innerhalb der Wandung angeordneten oder ausgebildeten Erfassungselement an der Wandung angeordnet oder ausgebildet. Eine entsprechende benachbarte Anordnung ermöglicht eine gute Wärmeübertragung von dem Kontaktelement auf das Erfassungselement. Unter einer benachbarten Anordnung kann je nach Anordnung und/oder Ausrichtung des Grundkörpers bzw. des Kontaktelements z. B. eine seitliche Anordnung und/oder Ausrichtung des Kontaktelements relativ zu dem Erfassungselement, eine Anordnung und/oder Ausrichtung des Kontaktelements oberhalb des Erfassungselements oder eine Anordnung und/oder Ausrichtung des Kontaktelements unterhalb des Erfassungselements verstanden werden.

Wie erwähnt, besteht zwischen dem Objekt und dem innerhalb der Wandung angeordneten oder ausgebildeten Erfassungselement typischerweise kein direkter Kontakt. Gleichermaßen besteht auch zwischen dem Kontaktelement und dem innerhalb der Wandung angeordneten oder ausgebildeten Erfassungselement typischerweise kein direkter Kontakt. Das Erfassungselement kann damit, insbesondere aufgrund seiner Anordnung oder Ausbildung innerhalb der Wandung, gegenüber dem Kontaktelement elektrisch isoliert sein. Durch die Anordnung bzw. Ausbildung des Erfassungselements innerhalb der Wandung kann sonach eine elektrische Isolierung des Erfassungselements gegenüber dem Kontaktelement realisiert sein, sodass an dem Kontaktelement etwaig anliegende elektrische Ströme und/oder Spannungen nicht auf das Erfassungselement übertragen werden können. Die elektrische Isolierung des Erfassungselements gegenüber dem Kontaktelement kann für Spannungsbereiche oberhalb 500 V, insbesondere oberhalb 1 kV, ausgelegt sein.

Das Kontaktelement kann in wenigstens einem Bewegungsfreiheitsgrad bewegbar gelagert an oder in der Wandung, innerhalb welcher das Erfassungselement angeordnet oder ausgebildet ist, angeordnet oder ausgebildet sein. Die in wenigstens einem Bewegungsfreiheitsgrad bewegbar gelagerte Anordnung bzw. Ausbildung des Kontaktelements kann z. B. zum Ausgleich von Fertigungstoleranzen des in dem Innenraum aufzunehmenden bzw. aufgenommenen Objekts und/oder zum erleichterten Einführen eines in dem Innenraum aufzunehmenden Objekts in den Innenraum dienen. Überdies ermöglicht die in wenigstens einem Bewegungsfreiheitsgrad bewegbar gelagerte Anordnung bzw. Ausbildung des Kontaktelements typischerweise eine möglichst flächige Kontaktierung zwischen dem Kontaktelement und einem in dem Innenraum aufgenommenen Objekt; dies insbesondere deshalb, als die Ausrichtung und/oder Position des Kontaktelements aufgrund seiner beweglichen Lagerung an die Ausrichtung und/oder Position eines in dem Innenraum aufzunehmenden oder aufgenommenen Objekts anpassbar ist.

Bei einem entsprechenden Bewegungsfreiheitsgrad des Kontaktelements kann es sich grundsätzlich um einen translatorischen und/oder um einen rotatorischen Bewegungsfreiheitsgrad handeln. Das Kontaktelement kann sonach um ein gewisses Maß, insbesondere relativ zu einer Referenzausrichtung und/oder -position des Kontaktelements, translatorisch entlang einer Translationsachse bewegt werden und/oder um ein gewisses Maß, insbesondere relativ zu einer Referenzausrichtung und/oder -position des Kontaktelements, rotatorisch um eine Rotationsachse bewegt werden. In einer konkreten Ausführungsform kann das Kontaktelement z. B. um ein gewisses Maß um eine Kipp- bzw. Schwenkachse verkippt bzw. verschwenkt werden.

Das Kontaktelement weist einen ersten Flächenabschnitt auf, welcher wenigstens eine Fläche (erste Fläche) mit einer zu einer Außengeometrie eines in den Aufnahmeraum aufzunehmenden bzw. aufgenommenen Objekts korrespondierenden Geometrie aufweist. Die erste Fläche ist im Betriebszustand der Vorrichtung, in welchem ein Objekt in dem Innenraum aufgenommen ist, dem in dem Innenraum aufgenommenen Objekt zugewandt. Der erste Flächenabschnitt kann sonach eine Fläche mit einer zu der Außengeometrie eines in den Aufnahmeraum aufzunehmenden bzw. aufgenommenen Objekts korrespondierenden Geometrie aufweisen. Eine entsprechende Fläche mit einer zu der Außengeometrie korrespondierenden Geometrie ermöglicht eine flächige Anlage des Kontaktelements an einem in dem Innenraum aufzunehmenden bzw. aufgenommenen Objekt und somit eine gute Wärmeübertragung von dem Objekt auf das Kontaktelement.

In einer konkreten Ausführungsform kann das Kontaktelement sonach z. B. einen ersten Flächenabschnitt aufweisen, welcher wenigstens eine ebene bzw. plane, d. h. nicht gekrümmte bzw. gewölbte, Fläche (erste Fläche) aufweist. Die ebene bzw. plane Fläche des ersten Flächenabschnitts kann eine plattenartige bzw. -förmige geometrische Grundform aufweisen. Der erste Flächenabschnitt ermöglicht eine flächige Anlage des Kontaktelements an einem in dem Innenraum aufgenommenen Objekt mit einer ebenen bzw. planen Außengeometrie und somit eine gute Wärmeübertragung von dem Objekt auf das Kontaktelement. Der erste Flächenabschnitt kann sonach eine ebene bzw. plane Fläche aufweisen, welche im Betriebszustand der Vorrichtung, in welchem ein Objekt in dem Innenraum aufgenommen ist, dem in dem Innenraum aufgenommenen Objekt zugewandt ist. Die ebene bzw. plane Fläche des ersten Flächenabschnitts kann z. B. parallel zu einer freiliegenden Außenwandung des Grundkörpers verlaufend ausgerichtet sein.

Wie sich im Weiteren ergibt, weist der erste Flächenabschnitt typischerweise ebenso eine Fläche (zweite Fläche) auf, welche im Betriebszustand der Vorrichtung, in welchem ein Objekt in dem Innenraum aufgenommen ist, von dem in dem Innenraum aufgenommenen Objekt abgewandt und dem Erfassungselement zugewandt ist. Die zweite Fläche ist der ersten Fläche typischerweise gegenüber liegend angeordnet.

Der erste Flächenabschnitt kann sonach im Betriebszustand der Vorrichtung, in welchem ein Objekt in dem Innenraum aufgenommen ist, mit einer der Wandung, innerhalb welcher das Erfassungselement angeordnet oder ausgebildet ist, zugewandten Fläche (zweite Fläche) einen, insbesondere ein- oder mehrdimensionalen, d. h. insbesondere linien- oder flächenförmigen, Auflage- bzw. Kontaktbereich zur Auflage des Kontaktelements auf der Wandung bzw. zur Kontaktierung des Kontaktelements mit der Wandung bilden. Die zweite Fläche kann gleichermaßen eben bzw. plan, d. h. nicht gekrümmt bzw. gewölbt, ausgeführt sein; dies ist jedoch nicht zwingend erforderlich, sodass - unabhängig von der ebenen bzw. planen Ausführung der ersten Fläche - eine zumindest abschnittsweise gekrümmte bzw. gewölbte Ausführung der zweiten Fläche denkbar ist.

Das Kontaktelement weist wenigstens einen winklig, insbesondere rechtwinklig, zu dem ersten Flächenabschnitt verlaufend ausgerichteten weiteren Flächenabschnitt auf. Insbesondere kann das Kontaktelement wenigstens zwei jeweils winklig, insbesondere rechtwinklig, zu dem ersten Flächenabschnitt verlaufend ausgerichtete weitere Flächenabschnitte aufweisen. Das Kontaktelement kann sonach - querschnittlich betrachtet - eine U-artige bzw. -förmige geometrische Grundform aufweisen. Sofern das Kontaktelement wenigstens zwei entsprechende weitere Flächenabschnitte aufweist, können diese parallel zueinander angeordnet oder ausgebildet sein. Das Kontaktelement kann sonach ein sich in mehreren unterschiedlichen Raumrichtungen erstreckendes dreidimensionales Bauelement darstellen, wobei - wie sich im Weiteren näher ergibt - die jeweiligen ersten und weiteren Flächenabschnitte unterschiedlich funktionalisiert sein können.

Ein entsprechender weiterer Flächenabschnitt kann beispielsweise eine stegartige bzw. - förmige geometrische Grundform aufweisen; auch ringartige bzw. -förmige geometrische Grundformen sind denkbar.

Der wenigstens eine weitere Flächenabschnitt kann einen Befestigungsbereich zur Befestigung des Kontaktelements an oder in der Wandung, innerhalb welcher das Erfassungselement angeordnet oder ausgebildet ist, bilden. Eine Funktion eines entsprechenden weiteren Flächenabschnitts kann sonach eine Befestigungsfunktion sein, welche eine Befestigung des Kontaktelements an der Wandung ermöglicht. Je nach geometrisch-konstruktiver Ausgestaltung des weiteren Flächenabschnitts kommen form- und/oder kraft- und/oder stoffschlüssige Befestigungen des Kontaktelements an der Wandung in Betracht; konkret kann ein entsprechender weiterer Flächenabschnitt z. B. mit Form- und/oder Kraftschlusselementen, welche eine form- und/oder kraftschlüssige Befestigung des Kontaktelements an der Wandung ermöglichen, versehen sein. Entsprechende Form- und/oder Kraftschlusselemente können z. B., gegebenenfalls hinterschnittene, Rast- oder Schnappelemente, Gewindeelemente, etc. sein oder solche umfassen.

Eine Befestigung des Kontaktelements an der Wandung, innerhalb welcher das Erfassungselement angeordnet oder ausgebildet ist, kann z. B. dadurch realisiert sein, dass das Kontaktelement zumindest abschnittsweise form- und/oder kraft- und/oder stoffschlüssig an der Wandung befestigt sein kann. Gemäß einem konkreten Beispiel kann das Kontaktelement die Wandung außenseitig zumindest abschnittsweise, gegebenenfalls vollständig, umgreifen. Grundsätzlich kommen zur Befestigung des Kontaktelements an der Wandung sonach z. B. Klebe-, Klemm-, Rast-, Schweiß- oder Spannbefestigungen in Betracht.

Eine Befestigung des Kontaktelements in der Wandung, innerhalb welcher das Erfassungselement angeordnet oder ausgebildet ist, kann z. B. dadurch realisiert sein, dass das Kontaktelement zumindest abschnittsweise form- und/oder kraft- und/oder stoffschlüssig in wenigstens einen, insbesondere aussparungsartigen oder -förmigen, Aufnahmebereich in der Wandung eingreift. Entsprechend kann in der Wandung, innerhalb welcher das Erfassungselement angeordnet oder ausgebildet ist, wenigstens ein, insbesondere aussparungsartiger oder -förmiger, Aufnahme- bzw. Eingriffsbereich zur Aufnahme bzw. zum Eingriff des wenigstens einen weiteren Flächenabschnitts angeordnet oder ausgebildet sein. Der Aufnahmebereich kann entsprechend einen Befestigungsbereich bilden oder einen solchen umfassen, welcher mit einem entsprechenden in diesem aufgenommenen weiteren Flächenabschnitt unter Ausbildung einer Befestigung des Kontaktelements an bzw. in der Wandung zusammenwirkt. Entsprechend kann der Aufnahmebereich z. B. mit Form- und/oder Kraftschlusselementen, welche eine form- und/oder kraftschlüssige Befestigung des Kontaktelements an bzw. in der Wandung ermöglichen, versehen sein. Entsprechende Form- und/oder Kraftschlusselemente können z. B., gegebenenfalls hinterschnittene, Rast- oder Schnappelemente, Gewindeelemente, etc. sein oder solche umfassen.

An dieser Stelle ist allgemein anzumerken, dass das Kontaktelement grundsätzlich unlösbar oder (beschädigungs- bzw. zerstörungsfrei) lösbar an oder in der Wandung, innerhalb welcher das Erfassungselement angeordnet oder ausgebildet ist, angeordnet oder ausgebildet, d. h. insbesondere befestigt, sein kann.

Der wenigstens eine weitere Flächenabschnitt ist insbesondere bezüglich seiner Längserstreckung, so bemessen, dass er das innerhalb der Wandung angeordnete oder ausgebildete Erfassungselement zumindest abschnittsweise umgibt bzw. umgreift. Entsprechend kann auch ein entsprechender Aufnahmebereich, insbesondere bezüglich seiner Längserstreckung, in der Wandung so bemessen sein, dass ein in diesem aufgenommener weiterer Flächenabschnitt das innerhalb der Wandung angeordnete oder ausgebildete Erfassungselement zumindest abschnittsweise umgibt bzw. umgreift. Das Erfassungselement kann sonach von wenigstens zwei Seiten, d. h. einerseits über den ersten Flächenabschnitt und andererseits über den wenigstens einen weiteren Flächenabschnitt, von dem Kontaktelement umgeben bzw. umgriffen sein. Derart ist es möglich, dass über ein in dem Innenraum aufgenommenes Objekt auf das Kontaktelement übertragene Wärme nicht allein über den ersten Flächenabschnitt, sondern auch über einen oder mehrere das Erfassungselement, insbesondere seitlich, umgebende bzw. umgreifende weitere Flächenabschnitte auf das Erfassungselement übertragen werden kann. Die Wärmeübertragung zwischen dem Kontaktelement und dem Erfassungselement kann derart verbessert werden.

Prinzipiell sind alternativ zu der beschriebenen Ausführungsform des Kontaktelements mit einem ersten und wenigstens einem weiteren Flächenabschnitt auch andere geometrisch-konstruktive Ausführungen des Kontaktelements denkbar. Beispielsweise ist eine wicklungsartige bzw. -förmige Ausführung des Kontaktelements denkbar; mithin könnte die Wandung, innerhalb welcher das Erfassungselement angeordnet oder ausgebildet ist, zumindest abschnittsweise, gegebenenfalls vollständig, mit dem Kontaktelement umwickelt sein.

Für alle Ausführungsformen gilt, dass die Vorrichtung eine hardware- und/oder softwaremäßig implementierte Auswerteeinrichtung zur Auswertung von von dem Erfassungselement gelieferten Signalen im Hinblick auf wenigstens ein Auswertekriterium umfassen kann. Die Auswerteeinrichtung kann insbesondere eingerichtet sein, entsprechende von dem Erfassungselement gelieferte Signale im Hinblick auf die Temperatur eines in dem Innenraum aufgenommenen Objekt auszuwerten. Die Auswerteeinrichtung ist signaltechnisch mit dem Erfassungselement verbindbar oder verbunden, sodass sich von dem Erfassungselement gelieferte Signale an die Auswerteeinrichtung übertragen lassen.

Ein zweiter Aspekt der Erfindung betrifft ein Fahrzeug, d. h. insbesondere ein Kraftfahrzeug, wie z. B. einen Personenkraftwagen, welches eine Vorrichtung gemäß dem ersten Aspekt der Erfindung umfasst.

Ein dritter Aspekt der Erfindung betrifft ein Verfahren zur Herstellung einer Vorrichtung zur Erfassung der Temperatur eines Objekts, insbesondere einer Vorrichtung gemäß dem ersten Aspekt der Erfindung. Das Verfahren zeichnet sich durch die folgenden Schritte aus:
- Ausbilden oder Bereitstellen eines Grundkörpers mit einem durch Wandungen begrenzten Innenraum zur Aufnahme des Objekts, wobei innerhalb wenigstens einer Wandung wenigstens ein zur Erfassung der Temperatur eingerichtetes Erfassungselement angeordnet oder ausgebildet ist,
- Anordnen oder Ausbilden wenigstens eines mit einem in dem Innenraum aufgenommenen Objekt in thermischen Kontakt bringbares thermisch leitfähiges Kontaktelements, an oder in der Wandung, innerhalb welcher das Erfassungselement angeordnet oder ausgebildet ist.

Sämtliche Ausführungen im Zusammenhang mit der Vorrichtung gemäß dem ersten Aspekt der Erfindung gelten analog für das Fahrzeug gemäß dem zweiten Aspekt der Erfindung und für das Verfahren gemäß dem dritten Aspekt der Erfindung.

Die Erfindung ist anhand von Ausführungsbeispielen in den Zeichnungen näher erläutert. Dabei zeigt:
Fig. 1, 2 je eine Prinzipdarstellung einer Vorrichtung zur Erfassung der Temperatur eines Objekts gemäß einem Ausführungsbeispiel; und
Fig. 3, 4 eine Prinzipdarstellung eines Kontaktelements gemäß einem Ausführungsbeispiel.

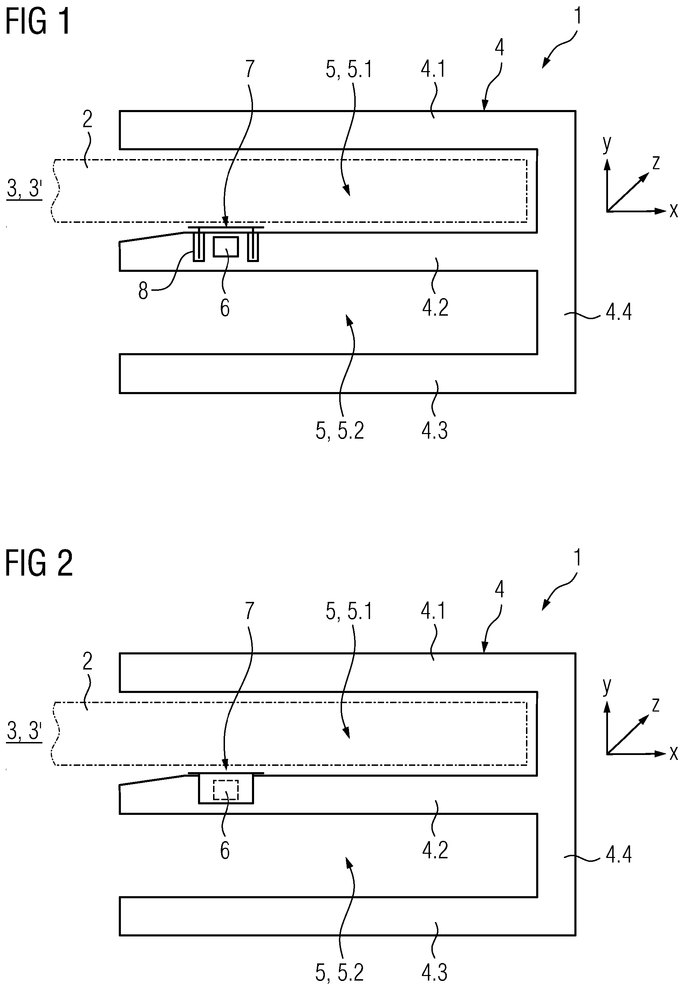

Fig. 1 zeigt eine Prinzipdarstellung einer Vorrichtung 1 zur Erfassung der Temperatur eines Objekts 2 gemäß einem ersten Ausführungsbeispiel in einer geschnittenen Ansicht.

Die Vorrichtung 1 ist zur Erfassung der Temperatur eines Objekts 2 eingerichtet und kann entsprechend auch als Sensoranordnung, d. h. insbesondere als Temperatursensoranordnung, bezeichnet bzw. erachtet werden.

Das gegebenenfalls auch als Messbauteil zu bezeichnende bzw. zu erachtende Objekt 2, dessen Temperatur vermittels der Vorrichtung 1 zu erfassen ist, ist aus einem thermisch leitfähigen Material, wie z. B. einem Metall, bzw. einer thermisch leitfähigen Materialstruktur, wie z. B. einer Metallstruktur, gebildet bzw. umfass ein(e) solche(s). Das Objekt 2 weist in dem Ausführungsbeispiel eine stabartige bzw. -förmige geometrisch-konstruktive Gestalt auf. Bei dem Objekt 2 kann es sich sonach um einen Stab aus Metall handeln.

Das Objekt 2 ist mit einer rein schematisch angedeuteten Wärmequelle 3 thermisch koppelbar oder gekoppelt, über welche das Objekt 2 temperierbar oder temperiert ist. Die Temperatur des Objekts 2 bestimmt sich sonach wesentlich durch die über die mit dem Objekt 2 thermisch koppelbare oder gekoppelte Wärmequelle 3 in das Objekt 2 einbringbare Wärmemenge. Die Wärmequelle 3 kann je nach Anwendung der Vorrichtung 1 variieren. Für eine denkbare Anwendung der Vorrichtung 1 in einem Fahrzeug, d. h. insbesondere in einem Kraftfahrzeug, wie z. B. einem Personenkraftwagen, kann die Wärmequelle 3 eine (kraft)fahrzeugseitige Wärmequelle sein.

Das Objekt 2 kann alternativ oder ergänzend mit einer rein schematisch angedeuteten Strom- und/oder Spannungsquelle 3' koppelbar oder gekoppelt sein. Insbesondere kann das Objekt 2 mit einer Hochspannungsquelle koppelbar oder gekoppelt sein; mithin kann an dem Objekt 2 eine Hochspannung, d. h. insbesondere eine Spannung oberhalb 1 kV, anliegen. Für das Beispiel einer Anwendung der Vorrichtung 1 in einem Fahrzeug, d. h. insbesondere in einem Kraftfahrzeug, wie z. B. einem Personenkraftwagen, kann die Strom- und/oder Spannungsquelle 3' eine (kraft)fahrzeugseitige Strom- und/oder Spannungsquelle sein.

Die Wärmequelle 3 kann identisch mit der Strom- und/oder Spannungsquelle 3' sein und umgekehrt.

Die Vorrichtung 1 umfasst einen Grundkörper 4. Der Grundkörper 4 kann auch als Gehäuseteil der Vorrichtung 1 bezeichnet bzw. erachtet werden. Der Grundkörper 4 weist ein oder mehrere Wandungen 4.1 - 4.n auf bzw. ist durch eine oder mehrere Wandungen 4.1 - 4.n definiert. Die eine oder mehreren Wandungen 4.1 - 4.n begrenzen einen Innenraum 5 zur Aufnahme eines entsprechenden Objekts 2. Der Grundkörper 4 kann z. B. eine hohlzylinderartige bzw. -förmige geometrische Grundform aufweisen. Die geometrisch-konstruktiven Eigenschaften, d. h. insbesondere Abmessungen, Form, etc., des Innenraums 5 sind typischerweise an die geometrisch-konstruktiven Eigenschaften, d. h. insbesondere Abmessungen, Form, etc., des in diesem aufzunehmenden bzw. aufgenommenen Objekts 2 angepasst, sodass ein Objekt 2 möglichst passgenau in dem Innenraum 5 aufnehmbar ist. Ein entsprechendes Objekt 2 kann, insbesondere aufgrund hoher Fertigungstoleranzen, mit einem gewissen Spiel in dem Innenraum 5 aufnehmbar oder aufgenommen sein.

Bei dem Grundkörper 4 der Vorrichtung handelt es sich typischerweise um ein Spritzgussteil. Der Grundkörper 4 ist sonach typischerweise aus einem spritzgießbaren oder spritzgegossenen Kunststoffmaterial gebildet. Insbesondere kommen spritzgießbare Kunststoffmaterialen mit einer hohen elektrischen und/oder thermischen Stabilität, d. h. insbesondere Hochleistungskunststoffmaterialien, in Betracht. Lediglich beispielhaft wird auf Polyamidimid (PAI), Polyetheretherketon (PEEK), Polyphenylensulfid (PPS), Polyphenylsulfon (PPSU), Polyimid (PI), Polyphthalamid (PPA) verwiesen. Mischungen chemisch unterschiedlicher Kunststoffmaterialien sind denkbar.

Sofern es sich bei der Vorrichtung 1 um eine besonders klein bauende Bauteilgruppe, wie z. B. eine Präzisionsbauteilgruppe, handelt, kann es sich bei dem Grundkörper 4 um ein Mikrospritzgussteil handeln.

In dem Ausführungsbeispiel gemäß Fig. 1 unterteilt eine stegartig bzw. -förmig ausgebildete Wandung 4.2 des Grundkörpers 4 den Innenraum 5 in zwei Innenraumbereiche 5.1, 5.2. Die Wandung 4.2 erstreckt sich von einer einen Boden des Grundkörpers 4 bildenden Wandung 4.4, in den Innenraum 5 erstrecken; der Innenraum 5 ist sonach durch die Wandung 4.2 unterteilt. Das Objekt 2 ist rein beispielhaft in dem Innenraumbereich 5.1 aufgenommen.

Die Wandung 4.2 ist in dem Ausführungsbeispiel gemäß Fig. 1 im Bereich ihres freien Endes zumindest einseitig mit einer rampenartigen bzw. -förmigen Gestaltung (optional) versehen. Derart kann z. B. ein einfaches Einführen eines in den Innenraum aufzunehmenden Objekts 2 in den Innenraum 5 realisiert werden. Die

Innerhalb der Wandung 4.2 ist ein zur Erfassung einer Temperatur eingerichtetes Erfassungselement 6 angeordnet oder ausgebildet. Die Wandung 4.2 ist sonach mit einem zur Erfassung einer Temperatur eingerichteten Erfassungselement 6 versehen. Ersichtlich ist das Erfassungselement 6 von dem die Wandung 4.2 bildenden Material umgeben bzw. umschlossen. Dies kann z. B. dadurch realisiert sein, dass das Erfassungselement 6 mit einem die Wandung 4.2 bildenden Material umspritzt oder in einem hierfür innerhalb der Wandung vorgesehenen Aufnahmeraum (nicht gezeigt) angeordnet oder ausgebildet ist.

Das Erfassungselement 6 ist als Temperatursensor ausgebildet oder umfasst einen solchen. Der Temperatursensor kann z. B. als Thermistor ausgebildet oder einen solchen umfassen. Der Thermistor kann z. B. als NTC-Element (Heißleiter) ausgebildet sein oder einen solchen umfassen.

Die Vorrichtung 1 umfasst ein mit einem in dem Innenraum 5 aufnehmbaren oder aufgenommenen Objekt 2 in thermischen Kontakt bringbares oder gebrachtes thermisch leitfähiges Kontaktelement 7. Anhand von Fig. 1 ist ersichtlich, dass das Kontaktelement 7 an der Wandung 4.2, d. h. an der Wandung, innerhalb welcher das Erfassungselement 6 angeordnet oder ausgebildet ist, angeordnet ist. Das Kontaktelement 7 ist sonach, insbesondere in thermischer Hinsicht, zwischen ein in dem Innenraum 5 aufnehmbares oder aufgenommenes Objekt 2 und das innerhalb der Wandung 4.2 angeordnete oder ausgebildete Kontaktelement 7 geschaltet angeordnet oder ausgebildet. Das Kontaktelement 7 ermöglicht damit eine verbesserte Wärmeübertragung zwischen einem in dem Innenraum 5 aufnehmbaren oder aufgenommenen Objekt 2 und dem innerhalb der Wandung 4.2 angeordneten oder ausgebildeten Erfassungselement 6. Das Kontaktelement 7 bildet sonach eine thermische Brücke zwischen einem in dem Innenraum 5 aufnehmbaren oder aufgenommenen Objekt 2 und dem innerhalb der Wandung 4.2 angeordneten oder ausgebildeten Erfassungselement 6, sodass, wenngleich zwischen dem Objekt 2 und dem innerhalb der Wandung 4.2 angeordneten oder ausgebildeten Erfassungselement 6 kein direkter Kontakt besteht, die Wärmeübertragung zwischen dem Objekt 2 und dem innerhalb der Wandung 4.2 angeordneten oder ausgebildeten Erfassungselement 6 (erheblich) verbessert ist.

Das Kontaktelement 7 ist aus einem thermisch leitfähigen Metall, wie z. B. Kupfer, gebildet sein oder umfasst ein solches. Alternativ oder ergänzend kann das Kontaktelement 7 aus einer thermisch leitfähigen Metallstruktur, wie z. B. einer Kupferstruktur, gebildet sein oder eine solche umfassen. Prinzipiell sind auch Ausführungen des Kontaktelements 7 aus anderen thermisch leitfähigen Materialien bzw. Materialstrukturen denkbar; beispielsweise ist auf mit thermisch leitfähigen Partikeln, wie z. B. Graphitpartikeln, gefüllte Kunststoffmaterialien zu verweisen.

Anhand der Fig. ist ersichtlich, dass das Kontaktelement 7 benachbart zu dem innerhalb der Wandung 4.2 angeordneten oder ausgebildeten Erfassungselement 6 an der Wandung 4.2 angeordnet oder ausgebildet ist. Diese benachbarte Anordnung ermöglicht eine gute Wärmeübertragung von dem Kontaktelement 7 auf das Erfassungselement 6. Anhand der Fig. ist ebenso ersichtlich, dass unter einer benachbarten Anordnung kann je nach Anordnung und/oder Ausrichtung des Grundkörpers 4 bzw. des Kontaktelements 7 z. B. eine seitliche Anordnung und/oder Ausrichtung des Kontaktelements 7 relativ zu dem Erfassungselement 6, eine Anordnung und/oder Ausrichtung des Kontaktelements 7 oberhalb des Erfassungselements 6 oder eine Anordnung und/oder Ausrichtung des Kontaktelements 7 unterhalb des Erfassungselements 6 verstanden werden kann.

Anhand der Fig. ist ersichtlich, dass zwischen dem Objekt 2 und dem Erfassungselement 6 kein direkter Kontakt sowie auch zwischen dem Kontaktelement 7 und dem Erfassungselement 6 kein direkter Kontakt besteht. Das Erfassungselement 6 ist aufgrund seiner Anordnung oder Ausbildung innerhalb der Wandung 4.2 gegenüber dem Kontaktelement 7 elektrisch isoliert. Durch die Anordnung bzw. Ausbildung des Erfassungselements 6 innerhalb der Wandung 4.2 ist sonach eine elektrische Isolierung des Erfassungselements 6 gegenüber dem Kontaktelement 7 realisiert, sodass an dem Kontaktelement 7 etwaig anliegende elektrische Ströme und/oder Spannungen nicht auf das Erfassungselement 6 übertragen werden können. Die elektrische Isolierung des Erfassungselements 6 gegenüber dem Kontaktelement 7 kann für Spannungsbereiche oberhalb 500 V, insbesondere oberhalb 1 kV, ausgelegt sein.

Das Kontaktelement 7 kann in wenigstens einem Bewegungsfreiheitsgrad bewegbar gelagert an oder in der Wandung 4.2 angeordnet oder ausgebildet sein. Die in wenigstens einem Bewegungsfreiheitsgrad bewegbar gelagerte Anordnung bzw. Ausbildung des Kontaktelements 7 kann z. B. zum Ausgleich von Fertigungstoleranzen des in dem Innenraum 5 aufzunehmenden bzw. aufgenommenen Objekts 2 und/oder zum erleichterten Einführen eines in dem Innenraum 5 aufzunehmenden Objekts 2 in den Innenraum 5 dienen. Überdies ermöglicht die in wenigstens einem Bewegungsfreiheitsgrad bewegbar gelagerte Anordnung bzw. Ausbildung des Kontaktelements 7 typischerweise eine möglichst flächige Kontaktierung zwischen dem Kontaktelement 7 und einem in dem Innenraum 5 aufgenommenen Objekt 2; dies insbesondere deshalb, als die Ausrichtung und/oder Position des Kontaktelements 7 aufgrund seiner beweglichen Lagerung an die Ausrichtung und/oder Position eines in dem Innenraum 5 aufzunehmenden oder aufgenommenen Objekts 2 anpassbar ist.

Bei einem entsprechenden Bewegungsfreiheitsgrad des Kontaktelements 7 kann es sich grundsätzlich um einen translatorischen und/oder um einen rotatorischen Bewegungsfreiheitsgrad handeln. Das Kontaktelement 7 kann sonach um ein gewisses Maß, insbesondere relativ zu einer Referenzausrichtung und/oder -position des Kontaktelements 7, translatorisch entlang einer Translationsachse, wie z. B. der x-, y- oder z-Achse des in Fig. 1 beispielhaft dargestellten Koordinatensystems, bewegt werden und/oder um ein gewisses Maß, insbesondere relativ zu einer Referenzausrichtung und/oder -position des Kontaktelements 7, rotatorisch um eine Rotationsachse, wie z. B. die x-, y- oder z-Achse des in Fig. 1 beispielhaft dargestellten Koordinatensystems, bewegt werden. In einer konkreten Ausführungsform kann das Kontaktelement 7 z. B. um ein gewisses Maß um eine Kipp- bzw. Schwenkachse, wie z. B. die z-Achse, verkippt bzw. verschwenkt werden.

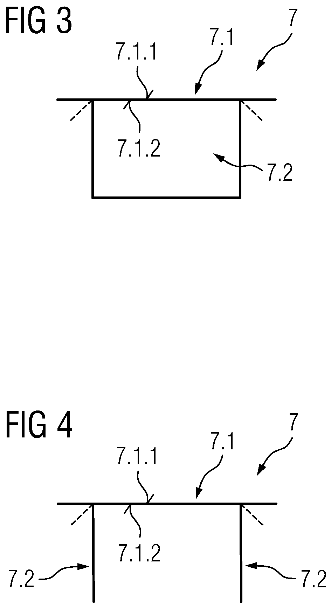

Ein Ausführungsbeispiel des Kontaktelements 7 ist in den Fig. 3, 4 näher dargestellt, wobei Fig. 3 eine erste Seitenansicht des Kontaktelements 7 und Fig. 4 eine hierzu um 90° gedrehte Seitenansicht des Kontaktelements 7 zeigt.

Anhand der Fig. 3, 4 ist ersichtlich, dass das Kontaktelement 7 erfindungsgemäß einen ersten Flächenabschnitt 7.1 aufweist, welcher wenigstens eine ebene bzw. plane, d. h. nicht gekrümmte bzw. gewölbte, erste Fläche 7.1.1 aufweist. Die erste Fläche 7.1.1 des ersten Flächenabschnitts 7.1 weist eine plattenartige bzw. -förmige geometrische Grundform auf. Der erste Flächenabschnitt 7.1 ermöglicht damit eine flächige Anlage des Kontaktelements 7 an einem in dem Innenraum 5 aufgenommenen Objekt 2 und somit eine gute Wärmeübertragung von dem Objekt 2 auf das Kontaktelement 7. Im Betriebszustand der Vorrichtung 1, in welchem ein Objekt 2 in dem Innenraum 5 aufgenommen ist, ist die erste Fläche 71.1. dem in dem Innenraum 5 aufgenommenen Objekt 2 zugewandt. Die erste Fläche 7.1.1 kann z. B. parallel zu einer freiliegenden Außenwandung des Grundkörpers 4 verlaufend ausgerichtet sein.

Anhand der Strichlierung ist in Fig. 3, 4 schematisch angedeutet, dass der erste Flächenabschnitt 7.1. nicht vollständig eben bzw. plan ausgeführt sein muss, d. h. auch winklig bezüglich der ersten Fläche 7.1.1 verlaufende Anschnitte aufweisen kann.

Grundsätzlich gilt, dass das Kontaktelement 7 einen ersten Flächenabschnitt 7.1 aufweisen kann, welcher wenigstens eine erste Fläche 7.1.1 mit einer zu einer Außengeometrie eines in den Aufnahmeraum 5 aufzunehmenden bzw. aufgenommenen Objekts 2 korrespondierenden Geometrie aufweist und somit eine flächige Anlage des Kontaktelements 7 an einem in dem Innenraum 5 aufzunehmenden bzw. aufgenommenen Objekt 2 und somit eine gute Wärmeübertragung von dem Objekt 2 auf das Kontaktelement 7 ermöglicht.

Ersichtlich weist der erste Flächenabschnitt 7.1 ebenso eine der ersten Fläche 7.1.1 gegenüber liegend angeordnete zweite Fläche 7.1.2 auf, welche im Betriebszustand der Vorrichtung 1 von dem in dem Innenraum 5 aufgenommenen Objekt 2 abgewandt und dem Erfassungselement 6 zugewandt ist.

Die zweite Fläche 7.1.2 kann - wie in dem Ausführungsbeispielen gemäß den Fig. 1, 2 beispielhaft dargestellt - gleichermaßen eben bzw. plan, d. h. nicht gekrümmt bzw. gewölbt, ausgeführt sein; dies ist jedoch nicht zwingend erforderlich, sodass - unabhängig von der ebenen bzw. planen Ausführung der ersten Fläche 7.1.1 - eine zumindest abschnittsweise gekrümmte bzw. gewölbte Ausführung der zweiten Fläche 7.1.2 denkbar ist.

Der erste Flächenabschnitt 7.1 kann sonach im Betriebszustand der Vorrichtung 1 mit der der Wandung 4.2, innerhalb welcher das Erfassungselement 6 angeordnet oder ausgebildet ist, zugewandten zweiten Fläche 7.1.2 einen, insbesondere ein- oder mehrdimensionalen, d. h. insbesondere linien- oder flächenförmigen, Auflage- bzw. Kontaktbereich zur Auflage des Kontaktelements 7 auf der Wandung 4.2 bzw. zur Kontaktierung des Kontaktelements 7 mit der Wandung 4.2 bilden.

Anhand der Fig. 3, 4 ist ferner ersichtlich, dass das Kontaktelement 7 erfindungsgemäß winklig, insbesondere rechtwinklig, zu dem ersten Flächenabschnitt 7.1 verlaufend ausgerichtete weitere Flächenabschnitte 7.2 aufweisen kann. Die weiteren Flächenabschnitte 7.2 sind in dem Ausführungsbeispiel parallel zueinander angeordnet oder ausgebildet sein. Das Kontaktelement 7 kann sonach - querschnittlich betrachtet - eine U-artige bzw. -förmige geometrische Grundform aufweisen. Das Kontaktelement 7 stellt sonach ein sich in mehreren unterschiedlichen Raumrichtungen erstreckendes dreidimensionales Bauelement dar.

Die weiteren Flächenabschnitte 7.2 können - wie in den Fig. 3, 4 beispielhaft gezeigt - jeweils eine stegartige bzw. -förmige geometrische Grundform aufweisen; jedoch sind auch ringartige bzw. -förmige geometrische Grundformen denkbar.

Die jeweiligen weiteren Flächenabschnitte 7.2 bilden jeweils einen Befestigungsbereich zur Befestigung des Kontaktelements 7 an der Wandung 4.2, innerhalb welcher das Erfassungselement 6 angeordnet oder ausgebildet ist. Die Funktion eines jeweiligen weiteren Flächenabschnitts 7.2 ist sonach eine Befestigungsfunktion, welche eine Befestigung des Kontaktelements 7 an der Wandung 4.2 ermöglicht. Je nach geometrisch-konstruktiver Ausgestaltung des jeweiligen weiteren Flächenabschnitts 4.2 kommen form- und/oder kraft- und/oder stoffschlüssige Befestigungen des Kontaktelements 7 an der Wandung 4.2 in Betracht; konkret kann ein jeweiliger weiterer Flächenabschnitt 7.2 z. B. mit Form- und/oder Kraftschlusselementen, welche eine form- und/oder kraftschlüssige Befestigung des Kontaktelements 7 an der Wandung 4.2 ermöglichen, versehen sein. Entsprechende Form- und/oder Kraftschlusselemente können z. B., gegebenenfalls hinterschnittene, Rast- oder Schnappelemente, Gewindeelemente, etc. sein oder solche umfassen.

Entsprechend sind in dem Ausführungsbeispiel gemäß Fig. 1 in der Wandung 4.2, innerhalb welcher das Erfassungselement 6 angeordnet oder ausgebildet ist, aussparungsartige oder - förmige Aufnahmebereiche 8 zur jeweiligen Aufnahme eines weiteren Flächenabschnitts 7.2 angeordnet oder ausgebildet. Das Kontaktelement 7 ist hier sonach zumindest abschnittsweise in der Wandung 4.2 befestigt. Die Aufnahmebereiche 8 können gleichermaßen einen Befestigungsbereich bilden oder einen solchen umfassen, welcher mit einem entsprechenden in diesem aufgenommenen weiteren Flächenabschnitt 7.2 unter Ausbildung einer Befestigung des Kontaktelements 7 an der Wandung 4.2 zusammenwirkt. Entsprechend kann ein jeweiliger Aufnahmebereich 8 z. B. mit Form- und/oder Kraftschlusselementen, welche eine form- und/oder kraftschlüssige Befestigung des Kontaktelements 7 an der Wandung 4.2 ermöglichen, versehen sein. Entsprechende Form- und/oder Kraftschlusselemente können z. B., gegebenenfalls hinterschnittene, Rast- oder Schnappelemente, Gewindeelemente, etc. sein oder solche umfassen.

Erfindungsgemäß sind die weiteren Flächenabschnitte 7.2, insbesondere bezüglich ihrer jeweiligen Längserstreckung, so bemessen, dass diese das innerhalb der Wandung 4.2 angeordnete oder ausgebildete Erfassungselement 6 zumindest abschnittsweise umgeben bzw. umgreifen. Entsprechend können auch jeweilige Aufnahmebereiche 8, insbesondere bezüglich ihrer jeweiligen Längserstreckung, in der Wandung 4.2 so bemessen sein, dass ein in diesen aufgenommener weiterer Flächenabschnitt 7.2 das innerhalb der Wandung 4.2 angeordnete oder ausgebildete Erfassungselement 6 zumindest abschnittsweise umgibt bzw. umgreift. Das Erfassungselement 6 kann sonach von wenigstens zwei Seiten, d. h. einerseits über den ersten Flächenabschnitt 7.1 und andererseits über die weiteren Flächenabschnitte 7.2, von dem Kontaktelement 7 umgeben bzw. umgriffen sein. Derart ist es möglich, dass über ein in dem Innenraum aufgenommenes Objekt 2 auf das Kontaktelement 7 übertragene Wärme nicht allein über den ersten Flächenabschnitt 7.1, sondern auch über die das Erfassungselement 6, insbesondere seitlich, umgebende bzw. umgreifende weiteren Flächenabschnitte 7.2 auf das Erfassungselement 6 übertragen werden kann.

Fig. 2 zeigt eine Prinzipdarstellung einer Vorrichtung 1 zur Erfassung der Temperatur eines Objekts 2 gemäß einem weiteren Ausführungsbeispiel in einer geschnittenen Ansicht.

Das in Fig. 2 gezeigte Ausführungsbeispiel unterscheidet sich von dem in Fig. 1 gezeigten Ausführungsbeispiel durch die Art der Befestigung des Kontaktelements 7 an der Wandung 4.2, innerhalb welcher das Erfassungselement 6 angeordnet oder ausgebildet ist. In dem in Fig. 2 gezeigten Ausführungsbeispiel ist das Kontaktelement 7 an der Wandung 4.2 befestigt. Die Wandung 4.2 ist hier nicht mit Aufnahmebereichen 8 versehen. Das Kontaktelement 7, d. h. insbesondere die weiteren Flächenabschnitte 4.2, umgreift die Wandung 4.2 außenseitig zumindest abschnittsweise. Das Kontaktelement 7 kann sonach z. B. auf die Wandung 4.2 aufgerastet sein.

Für alle Ausführungsbeispiele gilt, dass die Vorrichtung eine hardware- und/oder softwaremäßig implementierte Auswerteeinrichtung (nicht gezeigt) zur Auswertung von von dem Erfassungselement 6 gelieferten Signalen im Hinblick auf wenigstens ein Auswertekriterium umfassen kann. Die Auswerteeinrichtung kann insbesondere eingerichtet sein, entsprechende von dem Erfassungselement 6 gelieferte Signale im Hinblick auf die Temperatur eines in dem Innenraum 5 aufgenommenen Objekts 2 auszuwerten. Die Auswerteeinrichtung ist signaltechnisch mit dem Erfassungselement 6 verbindbar oder verbunden, sodass sich von dem Erfassungselement 6 gelieferte Signale an die Auswerteeinrichtung übertragen lassen.

Die Vorrichtung 1 lässt sich über ein Verfahren herstellen, welches die folgenden Schritte aufweist:
- Ausbilden oder Bereitstellen eines Grundkörpers 4 mit einem durch Wandungen 4.1 - 4.n begrenzten Innenraum 5 zur Aufnahme eines Objekts 2, dessen Temperatur zu erfassen ist, wobei innerhalb wenigstens einer Wandung 4.2 wenigstens ein zur Erfassung der Temperatur eingerichtetes Erfassungselement 6 angeordnet oder ausgebildet ist,
- Anordnen oder Ausbilden wenigstens eines mit einem in dem Innenraum 5 aufgenommenen Objekt 2 in thermischen Kontakt bringbares thermisch leitfähigen Kontaktelements 7, an oder in der Wandung 4.2, innerhalb welcher das Erfassungselement 6 angeordnet oder ausgebildet ist.

## Patentansprüche

1. Vorrichtung (1) zur Erfassung der Temperatur eines Objekts (2), umfassend einen Grundkörper (4) mit einem durch Wandungen (4.1 - 4.n) begrenzten Innenraum (5) zur Aufnahme eines Objekts (2), dessen Temperatur zu erfassen ist, wobei innerhalb wenigstens einer Wandung (4.1 - 4.n) wenigstens ein zur Erfassung der Temperatur eingerichtetes Erfassungselement (6) angeordnet oder ausgebildet ist, wobei die Vorrichtung (1) wenigstens ein thermisch leitfähiges Kontaktelement (7) umfasst, welches an oder in der Wandung (4.1 - 4.n), innerhalb welcher das Erfassungselement (6) angeordnet oder ausgebildet ist, angeordnet oder ausgebildet ist, wobei das Erfassungselement (6) vollständig von dem die Wandung (4.1 - 4.n) bildenden Material umgeben ist und zwischen dem Kontaktelement (7) und dem innerhalb der Wandung (4.1 - 4.n) angeordneten oder ausgebildeten Erfassungselement (6) kein direkter Kontakt besteht, **gekennzeichnet dadurch, dass**
das Kontaktelement (7) einen ersten Flächenabschnitt (7.1) umfasst, welcher wenigstens eine Fläche mit einer zu einer Außengeometrie eines in den Aufnahmeraum aufzunehmenden bzw. aufgenommenen Objekts (2) korrespondierenden Geometrie aufweist,
wobei das Kontaktelement (7) wenigstens einen winklig, insbesondere rechtwinklig, zu dem ersten Flächenabschnitt (7.1) verlaufend ausgerichteten weiteren Flächenabschnitt (7.2) umfasst,
wobei der wenigstens eine weitere Flächenabschnitt (7.2) so bemessen ist, dass er das Erfassungselement (6) zumindest abschnittsweise umgibt.

2. Vorrichtung nach Anspruch 1, **dadurch gekennzeichnet, dass** das Erfassungselement (6), insbesondere aufgrund seiner Anordnung oder Ausbildung in der Wandung (4.2), gegenüber dem Kontaktelement (7) elektrisch isoliert ist.

3. Vorrichtung nach Anspruch 1 oder 2, **dadurch gekennzeichnet, dass** das Kontaktelement (7) benachbart zu dem innerhalb der Wandung (4.1 - 4.n) angeordneten oder ausgebildeten Erfassungselement (6) an der Wandung (4.1 - 4.n) angeordnet oder ausgebildet ist.

4. Vorrichtung nach einem der vorhergehenden Ansprüche, **dadurch gekennzeichnet, dass** das Kontaktelement (7), insbesondere zum Ausgleich von Fertigungstoleranzen eines in dem Innenraum (5) aufgenommenen Objekts (2), in wenigstens einem Bewegungsfreiheitsgrad bewegbar gelagert, an oder in der Wandung (4.1 - 4.n), innerhalb welcher das Erfassungselement (6) angeordnet oder ausgebildet ist, angeordnet oder ausgebildet ist.

5. Vorrichtung nach einem der vorhergehenden Ansprüche, **dadurch gekennzeichnet, dass** der erste Flächenabschnitt (7.1) wenigstens eine ebene Fläche aufweist.

6. Vorrichtung nach einem der vorhergehenden Ansprüche, **dadurch gekennzeichnet, dass** der erste Flächenabschnitt (7.1) im Betriebszustand der Vorrichtung (1) mit einer der Wandung (4.1 - 4.n) zugewandten Seite einen, insbesondere linien- oder flächenförmigen, Auflagebereich zur Auflage des Kontaktelements (7) auf der Wandung (4.1 - 4.n) bildet.

7. Vorrichtung nach einem der vorhergehenden Ansprüche, **dadurch gekennzeichnet, dass** der wenigstens eine weitere Flächenabschnitt einen Befestigungsbereich zur Befestigung des Kontaktelements (7) an oder in der Wandung (4.1 - 4.n) bildet.

8. Vorrichtung nach Anspruch 6 oder 7, **dadurch gekennzeichnet, dass** in der Wandung (4.1 - 4.n) wenigstens ein, insbesondere aussparungsartiger oder -förmiger, Aufnahmebereich (8) zur Aufnahme des wenigstens einen weiteren Flächenabschnitts (7.2) angeordnet oder ausgebildet ist.

9. Vorrichtung nach einem der vorhergehenden Ansprüche, **dadurch gekennzeichnet, dass** der wenigstens eine weitere Flächenabschnitt (7.2) bezüglich seiner Längserstreckung so bemessen ist, dass er das Erfassungselement (6) zumindest abschnittsweise umgibt.

10. Vorrichtung nach einem der vorhergehenden Ansprüche, **dadurch gekennzeichnet, dass** das Kontaktelement (7) aus einem thermisch leitfähigen Metall gebildet ist oder ein solches umfasst oder aus einer thermisch leitfähigen Metallstruktur gebildet ist oder eine solche umfasst.

11. Vorrichtung nach einem der vorhergehenden Ansprüche, **dadurch gekennzeichnet, dass** der Grundkörper (4) aus einem spritzgießbaren oder spritzgegossenen Kunststoffmaterial gebildet ist.

12. Vorrichtung nach Anspruch 11, **dadurch gekennzeichnet, dass** das Kunststoffmaterial eine hohe elektrische und/oder thermische Stabilität aufweist.

13. Vorrichtung nach einem der vorhergehenden Ansprüche, **gekennzeichnet durch** eine Auswerteeinrichtung zur Auswertung von von dem Erfassungselement (6) gelieferten Signalen im Hinblick auf wenigstens ein Auswertekriterium.

14. Verfahren zur Herstellung einer Vorrichtung (1) zur Erfassung der Temperatur eines Objekts (2) nach einem der Ansprüche 1 bis 12, **gekennzeichnet durch** die Schritte:
- Ausbilden oder Bereitstellen des Grundkörpers (4) mit einem durch Wandungen (4.1
- 4.n) begrenzten Innenraum zur Aufnahme des Objekts (2), wobei innerhalb wenigstens einer Wandung (4.1 - 4.n) das wenigstens ein zur Erfassung der Temperatur eingerichtetes Erfassungselement (6) angeordnet oder ausgebildet ist,
- Anordnen oder Ausbilden des wenigstens eines thermisch leitfähigen Kontaktelements (7), an oder in der Wandung (4.2), innerhalb welcher das Erfassungselement (6) angeordnet oder ausgebildet ist, wobei das Erfassungselement (6) vollständig von dem die Wandung (4.1 - 4.n) bildenden Material umgeben ist und zwischen dem Kontaktelement (7) und dem innerhalb der Wandung (4.1 - 4.n) angeordneten oder ausgebildeten Erfassungselement (6) kein direkter Kontakt besteht,
wobei das Kontaktelement (7) den ersten Flächenabschnitt (7.1) umfasst, welcher die wenigstens eine Fläche mit einer zu einer Außengeometrie eines in den Aufnahmeraum aufzunehmenden bzw. aufgenommenen Objekts (2) korrespondierenden Geometrie aufweist,
wobei das Kontaktelement (7) den wenigstens einen winklig, insbesondere rechtwinklig, zu dem ersten Flächenabschnitt (7.1) verlaufend ausgerichteten weiteren Flächenabschnitt (7.2) umfasst.
wobei der wenigstens eine weitere Flächenabschnitt (7.2) so bemessen ist, dass er das Erfassungselement (6) zumindest abschnittsweise umgibt.

## Claims

1. Device (1) for sensing the temperature of an object (2), comprising a main body (4) having an interior space (5) bounded by walls (4.1 - 4.n) for receiving an object (2) whose temperature is to be sensed, wherein at least one sensing element (6) configured to sense the temperature is arranged or formed within at least one wall (4.1 - 4.n), wherein the device (1) comprises at least one thermally conductive contact element (7) which is arranged or formed on or in the wall (4.1 - 4.n) within which the sensing element (6) is arranged or formed, wherein the sensing element (6) is completely surrounded by the material forming the wall (4.1 - 4.n) and there is no direct contact between the contact element (7) and the sensing element (6) arranged or formed within the wall (4.1 - 4.n), **characterized in that**
wherein the contact element (7) comprises a first surface portion (7.1) which has at least one surface having a geometry corresponding to an external geometry of an object (2) to be received or received in the receiving space, respectively,
wherein the contact element (7) comprises at least one further surface portion (7.2) oriented to extend at an angle, in particular at a right angle, to the first surface portion (7.1),
wherein the at least one further surface portion (7.2) is dimensioned such that it surrounds the sensing element (6) at least in portions.

2. Device according to claim 1, **characterized in that** the sensing element (6) is electrically insulated from the contact element (7), in particular due to its arrangement or formation in the wall (4.2).

3. Device according to claim 1 or 2, **characterized in that** the contact element (7) is arranged or formed on the wall (4.1 - 4.n) adjacent to the sensing element (6) arranged or formed within the wall (4.1 - 4.n).

4. Device according to any one of the preceding claims, **characterized in that** the contact element (7) is arranged or formed on or in the wall (4.1 - 4.n) within which the sensing element (6) is arranged or formed, being mounted movably in at least one degree of freedom of movement, in particular to compensate for manufacturing tolerances of an object (2) received in the interior space (5).

5. Device according to any one of the preceding claims, **characterized in that** the first surface portion (7.1) has at least one planar surface.

6. Device according to any one of the preceding claims, **characterized in that**, in the operating state of the device (1), the first surface portion (7.1), with a side facing the wall (4.1 - 4.n), forms a bearing region, in particular a line-shaped or area-shaped bearing region, for the contact element (7) to bear on the wall (4.1 - 4.n).

7. Device according to any one of the preceding claims, **characterized in that** the at least one further surface portion forms a fastening region for fastening the contact element (7) on or in the wall (4.1 - 4.n).

8. Device according to claim 6 or 7, **characterized in that** at least one receiving region (8), in particular a recess-like or recess-shaped receiving region, for receiving the at least one further surface portion (7.2) is arranged or formed in the wall (4.1 - 4.n).

9. Device according to any one of the preceding claims, **characterized in that** the at least one further surface portion (7.2) is dimensioned with respect to its longitudinal extent such that it surrounds the sensing element (6) at least in portions.

10. Device according to any one of the preceding claims, **characterized in that** the contact element (7) is formed from or comprises a thermally conductive metal, or is formed from or comprises a thermally conductive metal structure.

11. Device according to any one of the preceding claims, **characterized in that** the main body (4) is formed from an injection-mouldable or injection-moulded plastics material.

12. Device according to claim 11, **characterized in that** the plastics material has high electrical and/or thermal stability.

13. Device according to any one of the preceding claims, **characterized by** an evaluation unit for evaluating signals supplied by the sensing element (6) with regard to at least one evaluation criterion.

14. Method for producing a device (1) for sensing the temperature of an object (2) according to any one of claims 1 to 12, **characterized by** the steps of:
- forming or providing the main body (4) having an interior space bounded by walls (4.1 - 4.n) for receiving the object (2), wherein the at least one sensing element (6) configured to sense the temperature is arranged or formed within at least one wall (4.1 - 4.n),
- arranging or forming the at least one thermally conductive contact element (7) on or in the wall (4.2) within which the sensing element (6) is arranged or formed, wherein the sensing element (6) is completely surrounded by the material forming the wall (4.1 - 4.n) and there is no direct contact between the contact element (7) and the sensing element (6) arranged or formed within the wall (4.1 - 4.n),
wherein the contact element (7) comprises the first surface portion (7.1) which has the at least one surface having a geometry corresponding to an external geometry of an object (2) to be received or received in the receiving space, respectively,
wherein the contact element (7) comprises the at least one further surface portion (7.2) oriented to extend at an angle, in particular at a right angle, to the first surface portion (7.1).
wherein the at least one further surface portion (7.2) is dimensioned such that it surrounds the sensing element (6) at least in portions.

## Revendications

1. Dispositif (1) de détection de la température d'un objet (2), comprenant un corps de base (4) présentant un espace intérieur (5) délimité par des parois (4.1 - 4.n) pour recevoir un objet (2) dont la température doit être détectée, dans lequel au moins un élément de détection (6) configuré pour détecter la température est disposé ou formé à l'intérieur d'au moins une paroi (4.1 - 4.n), dans lequel le dispositif (1) comprend au moins un élément de contact (7) thermiquement conducteur qui est disposé ou formé sur ou dans la paroi (4.1 - 4.n) à l'intérieur de laquelle l'élément de détection (6) est disposé ou formé, dans lequel l'élément de détection (6) est entièrement entouré par le matériau formant la paroi (4.1 - 4.n) et il n'existe aucun contact direct entre l'élément de contact (7) et l'élément de détection (6) disposé ou formé à l'intérieur de la paroi (4.1 - 4.n), **caractérisé en ce que**
dans lequel l'élément de contact (7) comprend une première portion de surface (7.1) qui présente au moins une surface ayant une géométrie correspondant à une géométrie extérieure d'un objet (2) à recevoir ou reçu, respectivement, dans l'espace de réception,
dans lequel l'élément de contact (7) comprend au moins une autre portion de surface (7.2) orientée de manière à s'étendre selon un angle, en particulier un angle droit, par rapport à la première portion de surface (7.1),
dans lequel ladite au moins une autre portion de surface (7.2) est dimensionnée de telle sorte qu'elle entoure l'élément de détection (6) au moins par portions.

2. Dispositif selon la revendication 1, **caractérisé en ce que** l'élément de détection (6) est isolé électriquement de l'élément de contact (7), en particulier en raison de sa disposition ou de sa formation dans la paroi (4.2).

3. Dispositif selon la revendication 1 ou 2, **caractérisé en ce que** l'élément de contact (7) est disposé ou formé sur la paroi (4.1 - 4.n) de manière adjacente à l'élément de détection (6) disposé ou formé à l'intérieur de la paroi (4.1 - 4.n).

4. Dispositif selon l'une quelconque des revendications précédentes, **caractérisé en ce que** l'élément de contact (7) est disposé ou formé sur ou dans la paroi (4.1 - 4.n) à l'intérieur de laquelle l'élément de détection (6) est disposé ou formé, en étant monté mobile selon au moins un degré de liberté de mouvement, en particulier pour compenser des tolérances de fabrication d'un objet (2) reçu dans l'espace intérieur (5).

5. Dispositif selon l'une quelconque des revendications précédentes, **caractérisé en ce que** la première portion de surface (7.1) présente au moins une surface plane.

6. Dispositif selon l'une quelconque des revendications précédentes, **caractérisé en ce que**, dans l'état de fonctionnement du dispositif (1), la première portion de surface (7.1) forme, avec un côté tourné vers la paroi (4.1 - 4.n), une zone d'appui, en particulier linéaire ou surfacique, pour l'appui de l'élément de contact (7) sur la paroi (4.1 - 4.n).

7. Dispositif selon l'une quelconque des revendications précédentes, **caractérisé en ce que** ladite au moins une autre portion de surface forme une zone de fixation pour fixer l'élément de contact (7) sur ou dans la paroi (4.1 - 4.n).

8. Dispositif selon la revendication 6 ou 7, **caractérisé en ce qu'**au moins une zone de réception (8), en particulier semblable à un évidement ou en forme d'évidement, pour recevoir ladite au moins une autre portion de surface (7.2) est disposée ou formée dans la paroi (4.1 - 4.n).

9. Dispositif selon l'une quelconque des revendications précédentes, **caractérisé en ce que** ladite au moins une autre portion de surface (7.2) est dimensionnée, en ce qui concerne son étendue longitudinale, de telle sorte qu'elle entoure l'élément de détection (6) au moins par portions.

10. Dispositif selon l'une quelconque des revendications précédentes, **caractérisé en ce que** l'élément de contact (7) est formé d'un métal thermiquement conducteur ou comprend un tel métal, ou est formé d'une structure métallique thermiquement conductrice ou comprend une telle structure.

11. Dispositif selon l'une quelconque des revendications précédentes, **caractérisé en ce que** le corps de base (4) est formé d'un matériau plastique moulable par injection ou moulé par injection.

12. Dispositif selon la revendication 11, **caractérisé en ce que** le matériau plastique présente une stabilité électrique et/ou thermique élevée.

13. Dispositif selon l'une quelconque des revendications précédentes, **caractérisé par** une unité d'évaluation pour évaluer des signaux fournis par l'élément de détection (6) au regard d'au moins un critère d'évaluation.

14. Procédé de fabrication d'un dispositif (1) de détection de la température d'un objet (2) selon l'une quelconque des revendications 1 à 12, **caractérisé par** les étapes suivantes:
- formation ou fourniture du corps de base (4) présentant un espace intérieur délimité par des parois (4.1 - 4.n) pour recevoir l'objet (2), dans lequel ledit au moins un élément de détection (6) configuré pour détecter la température est disposé ou formé à l'intérieur d'au moins une paroi (4.1 - 4.n),
- disposition ou formation dudit au moins un élément de contact (7) thermiquement conducteur sur ou dans la paroi (4.2) à l'intérieur de laquelle l'élément de détection (6) est disposé ou formé, dans lequel l'élément de détection (6) est entièrement entouré par le matériau formant la paroi (4.1 - 4.n) et il n'existe aucun contact direct entre l'élément de contact (7) et l'élément de détection (6) disposé ou formé à l'intérieur de la paroi (4.1 - 4.n),
dans lequel l'élément de contact (7) comprend la première portion de surface (7.1) qui présente ladite au moins une surface ayant une géométrie correspondant à une géométrie extérieure d'un objet (2) à recevoir ou reçu, respectivement, dans l'espace de réception,
dans lequel l'élément de contact (7) comprend ladite au moins une autre portion de surface (7.2) orientée de manière à s'étendre selon un angle, en particulier un angle droit, par rapport à la première portion de surface (7.1).
dans lequel ladite au moins une autre portion de surface (7.2) est dimensionnée de telle sorte qu'elle entoure l'élément de détection (6) au moins par portions.
